# EUROPEAN PATENT APPLICATION

(11) **EP 3 398 831 A1**
(43) Date of publication of application: **07.11.2018**
(21) Application number: 18169812.7
(22) Date of filing: 27.04.2018
(51) Int. Cl.: B62D 5/00

(54) **STEERING CONTROL APPARATUS**

(30) Priority: 01.05.2017 JP 2017091278
(71) Applicant: JTEKT CORPORATION, Chuo-ku, Osaka-shi Osaka 542-8502 (JP)
(72) Inventor: NAMIKAWA, Isao, Osaka-shi, Osaka 542-8502 (JP); YAMANO, Naoki, Osaka-shi, Osaka 542-8502 (JP)
(74) Representative: Winter, Brandl, Fürniss, Hübner, Röss, Kaiser, Polte - Partnerschaft mbB

(57) **Abstract**

A steering control apparatus determines in steps 104 and 105 whether one of an upper variation angle (δθh) and a lower variation angle (δθp) is greater than a first threshold value (α). When one of the upper variation angle (δθh) and the lower variation angle (δθp) is greater than the first threshold value (α), i.e., when the answer is YES in step 104 or the answer is YES in step 105, the steering control apparatus determines the state of a clutch in accordance with the result of a comparison between a resulting angle difference variation (D) and a second threshold value (β) in step 106. In step 108, the steering control apparatus updates a reference upper steering angle (θhb) and a reference lower steering angle (θpb) such that the reference upper steering angle (θhb) and the reference lower steering angle (θpb) respectively correspond to an upper steering angle (θh_n) and a lower steering angle (θp_n) obtained in a predetermined calculation period.

## Description

### BACKGROUND OF THE INVENTION

### 1. Field of the Invention

The invention relates to steering control apparatuses.

### 2. Description of the Related Art

Examples of steering systems known in the related art include a steer-by-wire steering system including: a steering unit to effect steering in response to a steering operation performed by a driver; a steered unit to turn a steered wheel in response to the steering effected by the steering unit; and a clutch to mechanically connect and disconnect the steering unit and the steered unit. Even when a controller outputs a control signal to engage or disengage the clutch, such a steering system may encounter a situation where the clutch is actually not engaged or disengaged for some reason. Thus, such a steering system usually determines the state of the clutch.

Japanese Patent Application Publication No. 2016-196242 (JP 2016-196242 A), for example, discloses a clutch state determining method involving: driving a steered motor of a steered unit after output of a control signal to disengage a clutch; and determining that the clutch is disengaged when an angle difference between a steering shaft coupled to an input shaft of the clutch and a pinion shaft coupled to an output shaft of the clutch is equal to or greater than a threshold value.

Even when the clutch is in an engaged state, a structural clearance (or backlash) inside the clutch, for example, may cause an angle difference between the steering shaft and the pinion shaft. This makes it necessary to increase the threshold value to a certain level in order to accurately determine the state of the clutch in accordance with the angle difference. Thus, the above method fails to determine the state of the clutch in accordance with the angle difference unless the amount of steering effected by the steering unit or the amount of turning of a steered wheel effected by the steered unit is increased. This leaves room for further improvement.

### SUMMARY OF THE INVENTION

An object of the invention is to provide a steering control apparatus that would accurately determine the state of a clutch even if the amount of steering or the amount of turning of a steered wheel is small.

An aspect of the invention provides a steering control apparatus to control a steering system. The steering system includes a steering unit, a steered unit, and a clutch. The steering unit is configured to effect steering in response to a steering operation performed by a driver. The steered unit is configured to effect turning of a steered wheel in response to the steering effected by the steering unit. The clutch is configured to mechanically connect and disconnect the steering unit and the steered unit. The steering control apparatus includes a reference steering angle setting circuit, a variation determining circuit, and a state determining circuit. The reference steering angle setting circuit is configured to set a reference upper steering angle and a reference lower steering angle in a first calculation period. The reference upper steering angle is used as a reference angle for an upper steering angle to be calculated in accordance with a detection value indicative of an amount of steering effected by the steering unit. The reference lower steering angle is used as a reference angle for a lower steering angle to be calculated in accordance with a detection value indicative of an amount of turning of a steered wheel effected by the steered unit. The variation determining circuit is configured to determine whether at least one of an upper variation angle and a lower variation angle is greater than a first threshold value. The upper variation angle is an angle difference between the reference upper steering angle and the upper steering angle calculated in a second calculation period after the first calculation period. The lower variation angle is an angle difference between the reference lower steering angle and the lower steering angle calculated in the second calculation period. The state determining circuit is configured to determine a state of the clutch in accordance with a result of a comparison between an angle difference variation and a second threshold value upon determination by the variation determining circuit that at least one of the upper variation angle and the lower variation angle is greater than the first threshold value. The angle difference variation is a variation in an angle difference between the upper steering angle and the lower steering angle that occurs between the first calculation period and the second calculation period. The reference steering angle setting circuit updates the reference upper steering angle and the reference lower steering angle after the state of the clutch is determined by the state determining circuit.

If an attempt is made to accurately determine the state of the clutch simply in accordance with an angle difference between the upper steering angle and the lower steering angle, the second threshold value is preferably set in consideration of the maximum value of an angle difference caused by, for example, a structural clearance when a vehicle is steered over the entire steerable range, with the clutch engaged. An angle difference also occurs between the upper steering angle and the lower steering angle in response to a steering position when the vehicle is steered by a predetermined amount smaller than the entire steerable range, with the clutch engaged. The inventors have conducted extensive studies to find out that although an angle difference caused by steering the vehicle by a predetermined amount changes in response to a steering position, an angle difference caused by steering the vehicle by a predetermined amount relative to any given steering position is smaller than the maximum value of an angle difference caused by steering the vehicle over the entire steerable range. Thus, monitoring the angle difference caused by steering the vehicle by the predetermined amount relative to any given steering position would make it possible to accurately determine the state of the clutch even if the second threshold value is small.

In view of the above findings, when at least one of the upper variation angle and the lower variation angle is greater than the first threshold value (i.e., when the amount of steering effected by the steering unit or the amount of turning of a steered wheel effected by the steered unit is greater than a predetermined amount), the above arrangement involves: determining the state of the clutch in accordance with the result of a comparison between the second threshold value and the resulting variation in angle difference between the upper steering angle and the lower steering angle; and updating the reference upper steering angle and the reference lower steering angle. Consequently, if the amount of steering or the amount of turning of a steered wheel is small, the steering control apparatus would accurately determine the state of the clutch each time the amount of steering or the amount of turning of a steered wheel exceeds the predetermined amount.

In another aspect of the invention, the second threshold value may be smaller than the first threshold value. When the amount of steering or the amount of turning of a steered wheel is greater than the predetermined amount, the resulting variation in angle difference between the upper steering angle and the lower steering angle is usually smaller than the predetermined amount. Thus, setting the second threshold value smaller than the first threshold value in this manner enables the steering control apparatus to suitably determine the state of the clutch.

In still another aspect of the invention, the reference steering angle setting circuit may update the reference upper steering angle and the reference lower steering angle in accordance with the upper steering angle and the lower steering angle calculated in the second calculation period.

This arrangement involves updating the reference upper steering angle and the reference lower steering angle in accordance with the upper steering angle and the lower steering angle that are already calculated when the state of the clutch is determined. Thus, the reference upper steering angle and the reference lower steering angle are updated more quickly than when the upper steering angle and the lower steering angle are calculated again.

In yet another aspect of the invention, the steering system may include a steering side motor disposed in the steering unit, and a steered side motor disposed in the steered unit. A rotation angle of the steering side motor may be used as the detection value indicative of the amount of steering effected by the steering unit. A rotation angle of the steered side motor may be used as the detection value indicative of the amount of turning of a steered wheel effected by the steered unit.

This arrangement makes it unnecessary to additionally provide special sensor(s) to detect the detection value indicative of the amount of steering effected by the steering unit and the detection value indicative of the amount of turning of a steered wheel effected by the steered unit. Consequently, the steering system will not be complicated in structure.

In still yet another aspect of the invention, the steering system may include an input shaft coupled to the steering unit of through a universal coupling and coupled to an input side of the clutch, and the steering system may include an output shaft coupled to the steered.

Suppose that two members are coupled to each other through a universal coupling, but the two members are not disposed coaxially with each other. In this case, the amount of rotation of the input side member and the amount of rotation of the output side member do not correspond to each other, and an angle difference (i.e., an angular speed difference) between the input side member and the output side member occurs periodically. Thus, if an attempt is made to accurately determine the state of the clutch simply in accordance with an angle difference between the upper steering angle and the lower steering angle, the second threshold value is likely to be large because the second threshold value has to be set in consideration of the amplitude of the angle difference that occurs periodically. To solve such a problem, the clutch state determination to be made for the steering system having the above arrangement, including the universal couplings interposed between the steering unit and the steered unit, involves monitoring the angle difference between the upper and lower steering angles caused by steering the vehicle by a predetermined amount relative to any given steering position. Consequently, the above arrangement is highly effective in accurately determining the state of the clutch.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram illustrating a steer-by-wire steering system;
FIG. 2 is a flow chart illustrating a procedure for determining a clutch state by a steering control apparatus; and
FIG. 3 is a graph illustrating angle differences between two members coupled to each other with a universal joint.

### DETAILED DESCRIPTION OF EMBODIMENTS

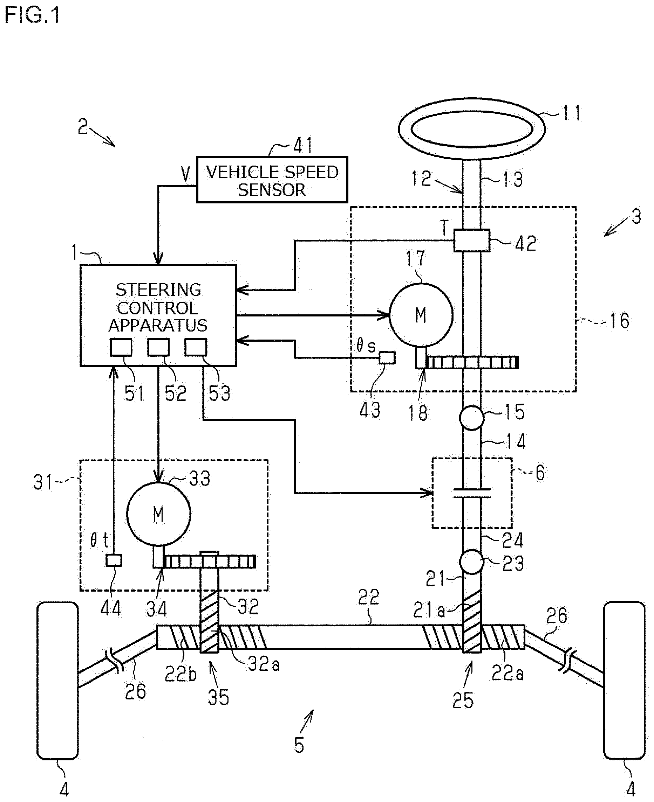

A steering control apparatus 1 according to an embodiment of the invention will be described below with reference to the drawings. As illustrated in FIG. 1, a steer-by-wire steering system 2 to be controlled by the steering control apparatus 1 includes: a steering unit 3 to effect steering in response to a steering operation performed by a driver; a steered unit 5 to effect turning of steered wheels 4 in response to the steering effected by the steering unit 3; and a clutch 6 to mechanically connect and disconnect the steering unit 3 and the steered unit 5.

The steering unit 3 includes a steering shaft 12. A steering wheel 11 is secured to the steering shaft 12. The steering shaft 12 includes: a column shaft 13 adjacent to the steering wheel 11; and an input intermediate shaft 14. The input intermediate shaft 14 functions as an input shaft Coupling the column shaft 13 to the input intermediate shaft 14 through a universal coupling (i.e., a universal joint) 15 provides the steering shaft 12. The universal coupling 15 used in the present embodiment is a hook joint. The input intermediate shaft 14 is connected to an input side member of the clutch 6.

The steering unit 3 is provided with a steering side actuator 16 that is able to provide a steering force to the steering shaft 12. The steering side actuator 16 includes: a steering side motor 17 that functions as a driving source; and a steering side speed reducer 18 to reduce the speed of rotation of the steering side motor 17 and transmit the resulting rotation to the column shaft 13.

The steered unit 5 includes a first pinion shaft 21, and a rack shaft 22 coupled to the first pinion shaft 21. An output intermediate shaft 24 is coupled to the first pinion shaft 21 through a universal coupling 23. The output intermediate shaft 24 functions as an output shaft. The output intermediate shaft 24 is also connected to an output side member of the clutch 6. The universal coupling 23 used in the present embodiment is a hook joint. The first pinion shaft 21 and the rack shaft 22 are disposed such that the first pinion shaft 21 and the rack shaft 22 intersect with each other at a predetermined angle. The first pinion shaft 21 is provided with first pinion teeth 21a. The rack shaft 22 is provided with first rack teeth 22a. The first pinion teeth 21a and the first rack teeth 22a mesh with each other so as to provide a first rack and pinion mechanism 25. Tie rods 26 are each coupled to an associated one of the ends of the rack shaft 22. An end of each tie rod 26 is coupled to an associated one of steering knuckles (not illustrated). The steered wheels 4 are each assembled to an associated one of the steering knuckles.

The steered unit 5 is provided with a steered side actuator 31 configured to provide a turning force for effecting turn of the steered wheels 4 to the rack shaft 22. A second pinion shaft 32 is disposed between the steered side actuator 31 and the rack shaft 22. The steered side actuator 31 includes: a steered side motor 33 that functions as a driving source; and a steered side speed reducer 34 to reduce the speed of rotation of the steered side motor 33 and transmit the resulting rotation to the second pinion shaft 32. The second pinion shaft 32 and the rack shaft 22 are disposed such that the second pinion shaft 32 and the rack shaft 22 intersect with each other at a predetermined angle. The second pinion shaft 32 is provided with second pinion teeth 32a. The rack shaft 22 is provided with second rack teeth 22b. The second pinion teeth 32a and the second rack teeth 22b mesh with each other so as to provide a second rack and pinion mechanism 35.

In an electric power steering (EPS) mode in which the clutch 6 is in an engaged state, the first rack and pinion mechanism 25 of the steering system 2 configured as described above converts rotation of the steering shaft 12 resulting from a steering operation into an axial movement of the rack shaft 22. The axial movement is transmitted to the steering knuckles through the tie rods 26 so as to change the steered angle of the steered wheels 4. In this case, at least one of the steering side actuator 16 and the steered side actuator 31 provides an assisting force to assist the driver in steering a vehicle.

In a steer-by-wire (SBW) mode in which the clutch 6 is in a disengaged state, the steered side actuator 31 rotates the second pinion shaft 32 in response to a steering operation performed by the driver. The second rack and pinion mechanism 35 converts the rotation of the second pinion shaft 32 into an axial movement of the rack shaft 22 so as to change the steered angle of the steered wheels 4. In this case, the steering side actuator 16 provides a steering reaction force to the steering wheel 11. The steering reaction force acts against the steering operation performed by the driver.

An electrical configuration of the present embodiment will be described below. The steering control apparatus 1 is connected to the clutch 6, the steering side actuator 16, and the steered side actuator 31 so as to control operations of the clutch 6, the steering side actuator 16, and the steered side actuator 31. Although not illustrated, the steering control apparatus 1 includes a central processing unit (CPU) and a memory. For each predetermined calculation period, the CPU executes a program stored in the memory. Thus, the steering control apparatus 1 carries out various control operations.

The steering control apparatus 1 is connected with: a vehicle speed sensor 41 to detect a vehicle speed V of the vehicle; and a torque sensor 42 to detect a steering torque T applied to the steering shaft 12. The torque sensor 42 is provided closer to the steering wheel 11 than a portion of the column shaft 13 coupled to the steering side actuator 16 (or more specifically, a portion of the column shaft 13 coupled to the steering side speed reducer 18). The steering control apparatus 1 is connected with: a steering side rotation sensor 43 to detect a rotation angle θs of the steering side motor 17; and a steered side rotation sensor 44 to detect a rotation angle θt of the steered side motor 33. The rotation angle θs is a detection value indicative of the amount of steering effected by the steering unit 3. The rotation angle θt is a detection value indicative of the amount of turning of a steered wheel effected by the steered unit 5.

The steering control apparatus 1 counts the number of revolutions from a steering neutral position, for example, so as to convert the rotation angle θs of the steering side motor 17 and the rotation angle θt of the steered side motor 33 into absolute angles in a range greater than 360 degrees. The steering control apparatus 1 multiplies the rotation angle θs of the steering side motor 17, detected by the steering side rotation sensor 43, by a conversion factor Ks based on the rotation speed ratio of the steering side speed reducer 18. Thus, the steering control apparatus 1 calculates an upper steering angle θh that is the angle of rotation of the steering wheel 11. The steering control apparatus 1 multiplies the rotation angle θt of the steered side motor 33, detected by the steered side rotation sensor 44, by a conversion factor Kt based on the rotation speed ratio of the steered side speed reducer 34, the rotation speed ratio of the first rack and pinion mechanism 25, and the rotation speed ratio of the second rack and pinion mechanism 35. Thus, the steering control apparatus 1 calculates a lower steering angle θp. The lower steering angle θp is equivalent to the angle of rotation of the steering wheel 11 when the clutch 6 is in the engaged state. The rotation angles θs and θt, the upper steering angle θh, and the lower steering angle θp are positive when they are the angles of rotation in a first direction relative to the steering neutral position, for example. The rotation angles θs and θt, the upper steering angle θh, and the lower steering angle θp are negative when they are the angles of rotation in a second direction relative to the steering neutral position, for example.

At normal times, the steering control apparatus 1 outputs, to the clutch 6, a control signal to put the clutch 6 in the disengaged state, and changes a steering mode to the SBW mode so as to control operations of the steering side actuator 16 and the steered side actuator 31. Specifically, in the SBW mode, the steering control apparatus 1 calculates, using a model formula, a target steering angle in accordance with the steering torque T. The model formula to be used may define and represent the relationship between the torque of a rotation shaft that rotates in accordance with rotation of the steering wheel 11 and the angle of rotation of the rotation shaft on the assumption that the steering wheel 11 is mechanically coupled to the steered wheels 4, for example. The steering control apparatus 1 carries out current feedback control such that the upper steering angle θh approaches (follow-up) the target steering angle. Thus, the steering control apparatus 1 supplies driving power to the steering side motor 17 so as to provide a steering reaction force to the steering unit 3 (or more specifically, the steering wheel 11). The steering control apparatus 1 carries out current feedback control such that the lower steering angle θp approaches the target steering angle. Thus, the steering control apparatus 1 supplies driving power to the steered side motor 33 so as to provide a turning force to the steered unit 5 (or more specifically, the second pinion shaft 32). The target steering angle for the lower steering angle θp may be obtained by multiplying the target steering angle for the upper steering angle θh by a transmission ratio that changes in accordance with the vehicle speed V.

For example, suppose that the temperature of the steered side motor 33 is equal to or higher than a predetermined temperature. In this case, the steering control apparatus 1 outputs, to the clutch 6, a control signal to put the clutch 6 in the engaged state, and changes the steering mode to the EPS mode so as to control operations of the steering side actuator 16 and the steered side actuator 31. Specifically, in the EPS mode, the steering control apparatus 1 calculates a target assisting force in accordance with the steering torque T and the vehicle speed V. The steering control apparatus 1 calculates the target assisting force such that the greater the steering torque T or the lower the vehicle speed V, the greater the assisting force. The steering control apparatus 1 drives at least one of the steering side actuator 16 and the steered side actuator 31 so as to provide the target assisting force. In one example, when the temperature of the steered side motor 33 is equal to or higher than the predetermined temperature and the steering mode is changed to the EPS mode, the steering control apparatus 1 may carry out control involving reducing the output of the steered side motor 33 and providing an assisting force in conjunction with the steering side motor 17.

In the EPS mode in which the control signal to engage the clutch 6 is output, the steering control apparatus 1 determines whether the clutch 6 is actually in the engaged state. When the result of the determination indicates that the clutch 6 is not in the engaged state, i.e., upon determining that the clutch 6 is the disengaged state, the steering control apparatus 1 changes the steering mode to the SBW mode, for example, and performs a process involving, for example, lighting a warning lamp of an indicator (not illustrated).

The following description discusses how the steering control apparatus 1 determines the state of the clutch 6. The steering control apparatus 1 determines the state of the clutch 6 by monitoring a variation D in the angle difference between the upper and lower steering angles θh and θp that occurs when the vehicle is steered by a predetermined amount relative to any given steering position.

More specifically, the steering control apparatus 1 according to the present embodiment sets a reference upper steering angle θhb to be used as a reference angle for the upper steering angle θh, and a reference lower steering angle θpb to be used as a reference angle for the lower steering angle θp. In the present embodiment, in a first calculation period immediately after the steering mode is changed to the EPS mode, the steering control apparatus 1 sets the reference upper steering angle θhb and the reference lower steering angle θpb such that the reference upper steering angle θhb and the reference lower steering angle θpb respectively correspond to an upper steering angle θh_0 and a lower steering angle θp_0 obtained in this calculation period. As will be described below, the reference upper steering angle θhb and the reference lower steering angle θpb are updated each time the state of the clutch 6 is determined.

The steering control apparatus 1 calculates an upper variation angle δθh. The upper variation angle δθh is an angle difference between the reference upper steering angle θhb and an upper steering angle θh_n calculated in a second calculation period after the first calculation period in which the reference upper steering angle θhb and the reference lower steering angle θpb are set. In addition, the steering control apparatus 1 calculates a lower variation angle δθp. The lower variation angle δθp is an angle difference between the reference lower steering angle θpb and a lower steering angle θp_n calculated in the second calculation period in which the upper steering angle θh_n is calculated. The steering control apparatus 1 determines whether at least one of the absolute value of the upper variation angle δθh and the absolute value of the lower variation angle δθp is greater than a first threshold value (variation determination threshold value) α set in advance. In other words, the steering control apparatus 1 determines whether the amount of steering effected by the steering unit 3 or the amount of turning of a steered wheel effected by the steered unit 5 is greater than a predetermined amount. The first threshold value α is a predetermined amount sufficiently smaller than any angle at which the vehicle is steerable by the steering system 2, with the clutch 6 in the engaged state. In one example, the first threshold value α is about three degrees.

Upon determining that at least one of the absolute value of the upper variation angle δθh and the absolute value of the lower variation angle δθp is greater than the first threshold value α, the steering control apparatus 1 calculates the variation D in the angle difference between the upper and lower steering angles θh_n and θp_n that occurs between the first calculation period in which the reference upper steering angle θhb and the reference lower steering angle θpb are set and the second calculation period. Specifically, the steering control apparatus 1 according to the present embodiment calculates the angle difference variation D that is the absolute value of the angle difference between the upper variation angle δθh and the lower variation angle δθp. Then, the steering control apparatus 1 determines the state of the clutch 6 in accordance with the result of a comparison between the angle difference variation D and a second threshold value (state determination threshold value) β set in advance. Specifically, the steering control apparatus 1 determines that the clutch 6 is in the disengaged state when the angle difference variation D is greater than the second threshold value β, and determines that the clutch 6 is in the engaged state when the angle difference variation D is equal to or smaller than the second threshold value β. In the present embodiment, the second threshold value β is smaller than the first threshold value α and greater than a variation in the angle difference between the upper and lower steering angles θh and θp that occurs when the vehicle is steered by a predetermined amount relative to any given steering position. In one example, the second threshold value β is about two degrees.

After determining the state of the clutch 6, the steering control apparatus 1 updates the reference upper steering angle θhb and the reference lower steering angle θpb such that the reference upper steering angle θhb and the reference lower steering angle θpb respectively correspond to the upper steering angle θh_n and the lower steering angle θp_n obtained in the second calculation period.

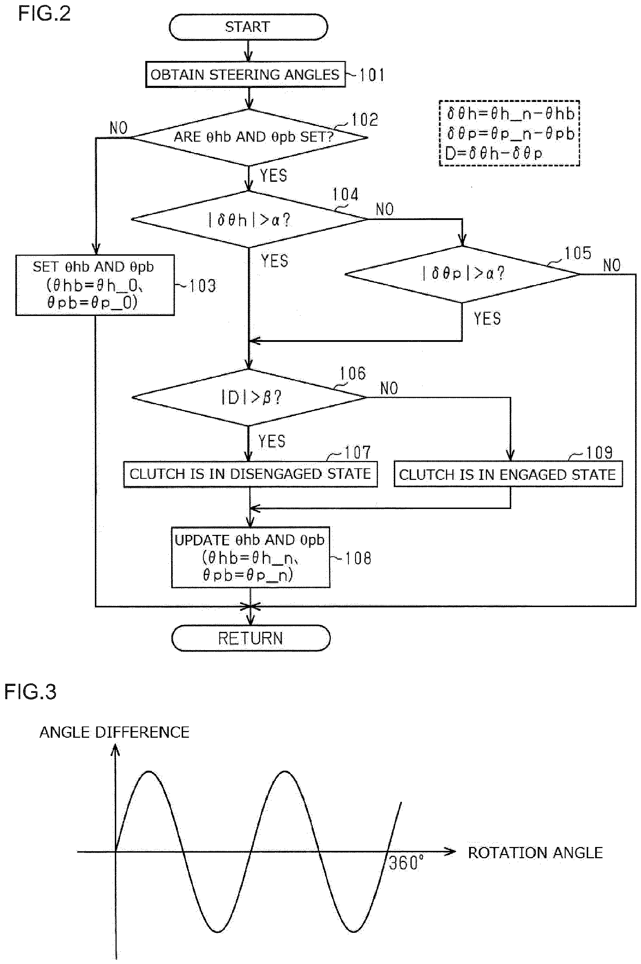

The following description discusses a procedure for determining the state of the clutch 6 by the steering control apparatus 1 according to the present embodiment. As indicated by the flow chart illustrated in FIG. 2, in step 101, the steering control apparatus 1 obtains the upper steering angle θh and the lower steering angle θp that are detection values provided from various sensors. In step 102, the steering control apparatus 1 determines whether the reference upper steering angle θhb and the reference lower steering angle θpb are set in the memory. When neither of the reference upper steering angle θhb and the reference lower steering angle θpb is set in the memory (i.e., when the answer is NO in step 102), the procedure goes to step 103. In step 103, the steering control apparatus 1 sets the reference upper steering angle θhb and the reference lower steering angle θpb such that the reference upper steering angle θhb and the reference lower steering angle θpb respectively correspond to the upper steering angle θh_0 and the lower steering angle θp_0 obtained in step 101. After step 103, the state determination in this calculation period ends.

When the reference upper steering angle θhb and the reference lower steering angle θpb are set in the memory (i.e., when the answer is YES in step 102), the steering control apparatus 1 determines in step 104 whether a difference between the upper steering angle θh_n and the reference upper steering angle θhb (i.e., the absolute value of the upper variation angle δθh) is greater than the first threshold value α. When the absolute value of the upper variation angle δθh is equal to or smaller than the first threshold value α (i.e., when the answer is NO in step 104), the steering control apparatus 1 determines in step 105 whether a difference between the lower steering angle θp_n and the reference lower steering angle θpb (i.e., the absolute value of the lower variation angle δθp) is greater than the first threshold value α. When the absolute value of the upper variation angle δθh is greater than the first threshold value α (i.e., when the answer is YES in step 104) or when the absolute value of the lower variation angle δθp is greater than the first threshold value α (i.e., when the answer is YES in step 105), the procedure goes to step 106. When the absolute value of the lower variation angle δθp is equal to or smaller than the first threshold value α (i.e., when the answer is NO in step 105), the procedure does not go to step 106. The steering control apparatus 1 includes a variation determining circuit 51 to perform processes equivalent to step 104 and step 105.

In step 106, the steering control apparatus 1 determines whether the absolute value of a difference between the upper variation angle δθh and the lower variation angle δθp (i.e., the angle difference variation D) is greater than the second threshold value β. When the angle difference variation D is greater than the second threshold value β (i.e., when the answer is YES in step 106), the steering control apparatus 1 determines in step 107 that the clutch 6 is in the disengaged state. Then, the procedure goes to step 108. When the angle difference variation D is equal to or smaller than the second threshold value β (i.e., when the answer is NO in step 106), the steering control apparatus 1 determines in step 109 that the clutch 6 is in the engaged state (or the clutch 6 is not in the disengaged state). Then, the procedure goes to step 108. The steering control apparatus 1 includes a state determining circuit 52 to perform processes equivalent to step 106, step 107, and step 109. In step 108, the steering control apparatus 1 updates the reference upper steering angle θhb and the reference lower steering angle θpb such that the reference upper steering angle θhb and the reference lower steering angle θpb respectively correspond to the upper steering angle θh_n and the lower steering angle θp_n obtained in this calculation period. The steering control apparatus 1 includes a reference steering angle setting circuit 53 to perform processes equivalent to step 103 and step 108.

The present embodiment achieves effects described below.
(1) When one of the upper variation angle δθh and the lower variation angle δθp is greater than the first threshold value α, the steering control apparatus 1 determines the state of the clutch 6 in accordance with the result of a comparison between the resulting angle difference variation D and the second threshold value β. The steering control apparatus 1 then updates the reference upper steering angle θhb and the reference lower steering angle θpb. Consequently, even if the amount of steering effected by the steering unit 3 or the amount of turning of a steered wheel effected by the steered unit 5 is small, the steering control apparatus 1 would accurately determine the state of the clutch 6 each time the amount of steering or the amount of turning of a steered wheel exceeds the first threshold value α.
(2) When the amount of steering effected by the steering unit 3 or the amount of turning of a steered wheel effected by the steered unit 5 is greater than the predetermined amount, the resulting angle difference variation D is usually smaller than the predetermined amount. Thus, the present embodiment involves setting the second threshold value β smaller than the first threshold value α. This enables the steering control apparatus 1 to suitably determine the state of the clutch 6.
(3) The steering control apparatus 1 updates the reference upper steering angle θhb and the reference lower steering angle θpb such that the reference upper steering angle θhb and the reference lower steering angle θpb respectively correspond to the upper steering angle θh_n and the lower steering angle θpn obtained in the calculation period in which the state of the clutch 6 is determined. This enables the steering control apparatus 1 to update the reference upper steering angle θhb and the reference lower steering angle θpb more quickly than when the upper steering angle θh and the lower steering angle θp are obtained again.
(4) The steering control apparatus 1 calculates the upper steering angle θh in accordance with the rotation angle θs of the steering side motor 17 and calculates the lower steering angle θp in accordance with the rotation angle θt of the steered side motor 33. This makes it unnecessary to additionally provide sensor(s) to detect a detection value indicative of the amount of steering effected by the steering unit 3 and a detection value indicative of the amount of turning of a steered wheel effected by the steered unit 5. Thus, the steering system 2 will not be complicated in structure.
(5) The steer-by-wire steering system 2 includes the input shaft (i.e., the input intermediate shaft 14 in the present embodiment) coupled to the steering unit 3 through the universal coupling 15 and coupled to the input side member of the clutch 6. The steer-by-wire steering system 2 also includes the output shaft (i.e., the output intermediate shaft 24 in the present embodiment) coupled to the steered unit 5 through the universal coupling 23 and coupled to the output side member of the clutch 6.

Suppose that two members are coupled to each other through a hook joint serving as a universal coupling, but the two members are not disposed coaxially with each other (or the two members are disposed such that a predetermined bending angle is formed). In this case, the amount of rotation of the input side member and the amount of rotation of the output side member do not correspond to each other, and an angle difference (i.e., an angular speed difference) between the input side member and the output side member occurs periodically as illustrated in FIG. 3. Thus, if an attempt is made to accurately determine the state of the clutch 6 simply in accordance with an angle difference between the upper steering angle θh and the lower steering angle θp as in the conventional technique, the second threshold value β is likely to be large because the second threshold value β has to be set in consideration of the amplitude of the angle difference that occurs periodically. To solve such a problem, the determination of the state of the clutch 6 to be made for the steering system 2 according to the present embodiment, including the universal couplings 15 and 23 interposed between the steering unit 3 and the steered unit 5, involves monitoring the angle difference variation D caused by steering the vehicle by a predetermined amount relative to any given steering position. Consequently, the present embodiment is highly effective in accurately determining the state of the clutch 6.

The invention may be modified as appropriate and may be embodied in other forms as described below. Although the foregoing embodiment involves calculating the angle difference variation D that is the absolute value of an angle difference between the upper variation angle δθh and the lower variation angle δθp, the angle difference variation D may be calculated in any other manner. One example may involve: calculating a first angle difference between the reference upper steering angle θhb and the reference lower steering angle θpb; calculating a second angle difference between the upper steering angle θh and the lower steering angle θp; and calculating the angle difference variation D that is the absolute value of a difference between the first and second angle differences.

In the first calculation period immediately after the steering mode is changed to the EPS mode, the foregoing embodiment involves setting the reference upper steering angle θhb and the reference lower steering angle θpb such that the reference upper steering angle θhb and the reference lower steering angle θpb respectively correspond to the upper steering angle θh_0 and the lower steering angle θp_0 obtained in this calculation period. Alternatively, the reference upper steering angle θhb and the reference lower steering angle θpb may be set in any other manner. One example may involve setting the reference upper steering angle θhb and the reference lower steering angle θpb in advance. In this case, initial settings for the reference upper steering angle θhb and the reference lower steering angle θpb may be changed when necessary.

The foregoing embodiment involves updating the reference upper steering angle θhb and the reference lower steering angle θpb such that the reference upper steering angle θhb and the reference lower steering angle θpb respectively correspond to the upper steering angle θh_n and the lower steering angle θp_n obtained in the calculation period in which the state of the clutch 6 is determined. Alternatively, the reference upper steering angle θhb and the reference lower steering angle θpb may be updated in any other manner. One example may involve updating the reference upper steering angle θhb and the reference lower steering angle θpb such that the reference upper steering angle θhb and the reference lower steering angle θpb respectively correspond to the upper steering angle θh and the lower steering angle θp obtained in a different calculation period after the state of the clutch 6 is determined.

The foregoing embodiment involves determining the state of the clutch 6 when one of the absolute value of the upper variation angle δθh and the absolute value of the lower variation angle δθp is greater than the first threshold value α. Alternatively, the state of the clutch 6 may be determined in any other manner. One example may involve determining the state of the clutch 6 when both of the absolute value of the upper variation angle δθh and the absolute value of the lower variation angle δθp are greater than the first threshold value α. The first threshold value α to be compared with the upper variation angle δθh and the first threshold value α to be compared with the lower variation angle δθp may be different from each other.

The foregoing embodiment involves setting the second threshold value β smaller than the first threshold value α. Alternatively, the second threshold value β may be set in any other manner. The second threshold value β may be set to be equal to or greater than the first threshold value α. The foregoing embodiment involves calculating the upper steering angle θh in accordance with the rotation angle θs of the steering side motor 17, and calculating the lower steering angle θp in accordance with the rotation angle θt of the steered side motor 33. Alternatively, the upper steering angle θh and the lower steering angle θp may be calculated in any other manner. One example may involve providing a rotation angle sensor to detect a rotation angle of the steering shaft 12, and calculating the upper steering angle θh in accordance with the rotation angle detected by the rotation angle sensor. Another example may involve providing a stroke sensor to detect an axial position of the rack shaft 22, and calculating the lower steering angle θp in accordance with the axial position detected by the stroke sensor.

The foregoing embodiment involves determining whether the clutch 6 is erroneously disengaged in the EPS mode in which a control signal to engage the clutch 6 is output. Alternatively, the state of the clutch 6 may be determined in any other manner. One example may involve determining whether the clutch 6 is surely disengaged when a control signal to disengage the clutch 6 is output.

In the foregoing embodiment, the steering system 2 including the universal couplings 15 and 23 interposed between the steering unit 3 and the steered unit 5 is to be controlled by the steering control apparatus 1. Alternatively, any other type of steering system may be controlled by the steering control apparatus 1. A steering system including no universal coupling between the steering unit 3 and the steered unit 5, such as a steering system including a constant velocity joint between the steering unit 3 and the steered unit 5, may be controlled by the steering control apparatus 1.

## Claims

1. A steering control apparatus to control a steering system including
a steering unit to effect steering in response to a steering operation performed by a driver,
a steered unit to effect turning of a steered wheel in response to the steering effected by the steering unit, and
a clutch to mechanically connect and disconnect the steering unit and the steered unit, the steering control apparatus comprising:
a reference steering angle setting circuit to set a reference upper steering angle and a reference lower steering angle in a first calculation period, the reference upper steering angle being used as a reference angle for an upper steering angle to be calculated in accordance with a detection value indicative of an amount of steering effected by the steering unit, the reference lower steering angle being used as a reference angle for a lower steering angle to be calculated in accordance with a detection value indicative of an amount of turning of the steered wheel effected by the steered unit;
a variation determining circuit to determine whether at least one of an upper variation angle and a lower variation angle is greater than a first threshold value, the upper variation angle being an angle difference between the reference upper steering angle and the upper steering angle calculated in a second calculation period after the first calculation period, the lower variation angle being an angle difference between the reference lower steering angle and the lower steering angle calculated in the second calculation period; and
a state determining circuit to determine a state of the clutch in accordance with a result of a comparison between an angle difference variation and a second threshold value upon determination by the variation determining circuit that at least one of the upper variation angle and the lower variation angle is greater than the first threshold value, the angle difference variation being a variation in an angle difference between the upper steering angle and the lower steering angle that occurs between the first calculation period and the second calculation period, wherein
the reference steering angle setting circuit updates the reference upper steering angle and the reference lower steering angle after the state of the clutch is determined by the state determining circuit.

2. The steering control apparatus according to claim 1, wherein
the second threshold value is smaller than the first threshold value.

3. The steering control apparatus according to claim 1 or 2, wherein
the reference steering angle setting circuit updates the reference upper steering angle and the reference lower steering angle in accordance with the upper steering angle and the lower steering angle calculated in the second calculation period.

4. The steering control apparatus according to any one of claims 1 to 3, wherein
the steering system includes
a steering side motor disposed in the steering unit, and
a steered side motor disposed in the steered unit,
a rotation angle of the steering side motor is used as the detection value indicative of the amount of steering effected by the steering unit, and
a rotation angle of the steered side motor is used as the detection value indicative of the amount of turning of the steered wheel effected by the steered unit.

5. The steering control apparatus according to any one of claims 1 to 4, wherein
the steering system includes an input shaft coupled to the steering unit of through a universal coupling and coupled to an input side of the clutch, and
the steering system includes an output shaft coupled to the steered unit through a universal coupling and coupled to an output side of the clutch.
